## Europäisches Patentamt
## European Patent Office
## Office européen des brevets

(19)

(11) Numéro de publication: **0 119 906**
**B1**

(12) # FASCICULE DE BREVET EUROPEEN

(45) Date de publication du fascicule du brevet:
**28.12.88**

(51) Int. Cl.⁴: **B 60 R 13/06**

(21) Numéro de dépôt: **84400452.3**

(22) Date de dépôt: **07.03.84**

(54) **Garniture pour montage d'un vitrage de sécurité dans une baie notamment d'un pare-brise pour véhicule automobile.**

(30) Priorité: **09.03.83 FR 8303819**

(43) Date de publication de la demande:
**26.09.84 Bulletin 84/39**

(45) Mention de la délivrance du brevet:
**28.12.88 Bulletin 88/52**

(84) Etats contractants désignés:
**AT BE CH DE FR GB IT LI LU NL SE**

(56) Documents cités:
**FR-A- 1 465 492**
**FR-A- 2 373 432**
**NL-A- 8 000 764**
**US-A- 3 027 186**

(73) Titulaire: **SAINT-GOBAIN VITRAGE, Les Miroirs 18, avenue d'Alsace, F-92400 Courbevoie (FR)**

(72) Inventeur: **Roselli, Sergio, Via 24 Maggio 120, Pise (IT)**

(74) Mandataire: **Leconte, Jean-Gérard et al, Saint-Gobain Recherche 39, Quai Lucien Lefranc, F-93304 Aubervilliers Cedex (FR)**

ACTORUM AG

## Description

La présente invention concerne une garniture pour le montage d'un vitrage dans un châssis et en particulier la fixation d'une glace de sécurité dans la feuillure d'une baie de véhicule automobile.

Dans la description qui va suivre, nous n'évoquerons que le cas du pare-brise d'automobile, mais il est malgré tout entendu que l'invention peut être employée pour monter un vitrage dans n'importe quelle baie, de bâtiment, de véhicule ou d'appareils divers.

Différents modes de fixation de pare-brise sont utilisés: large garniture en caoutchouc qui enserre le pare-brise d'un côté et dont deux lèvres de l'autre côté chevauchent la bordure métallique de la baie dans laquelle doit être monté le pare-brise.

La large garniture en caoutchouc enserrant d'un côté le pare-brise, de l'autre la bordure de la baie n'est pas recommandable pour des questions d'aérodynamique car les lèvres forment une protubérance qui perturbe l'écoulement de l'air et en outre elle ne permet pas l'automatisation du montage des pare-brise dans les baies.

Le collage quant à lui, s'il favorise un meilleur écoulement de l'air et s'il est compatible avec un montage automatisé, il nécessite une bande d'émail sur le bord du pare-brise pour masquer la colle visible de l'extérieur et inesthétique et il pose des problèmes de décollement lors du remplacement du pare-brise.

Il est également connu par le brevet NL-A-8 000 764 un autre mode de montage d'un vitrage dans une feuillure, faisant appel à une garniture ayant sur son dos une excroissance creuse déformable destinée à coopérer avec la feuillure. Cependant, cette déformabilité peut faire craindre que le vitrage ne soit pas suffisamment maintenu.

La présente invention vise à permettre un montage facile des vitrages dans des feuillures et en particulier des pare-brise sur les véhicules, notamment les automobiles, sans poser les problèmes précédemment cités, à savoir: difficultés de montage automatisé, masquage de la colle par bande d'émail, difficultés de décollement, mauvaise ligne aérodynamique, maintien incertain du vitrage.

Elle propose pour cela une garniture pour le montage d'un vitrage dans la feuillure d'une baie ayant sur son dos, c'est-à-dire du côté opposé à celui en contact avec le vitrage, des excroissances qui forment une nervure en relief continue destinée à coopérer avec des cavités formant une rainure en creux dans la feuillure caractérisée en ce qu'elle est constituée de deux parties en matières de consistances différentes, une première partie ou dos en forme de bande, munie des excroissances et en contact avec la feuillure, en une matière souple facilement déformable, du type caoutchouc alvéolaire, et une seconde partie en une matière plus rigide et plus ferme, en contact avec le vitrage.

Cette garniture est en principe associée avec:

– un vitrage,
– une feuillure munie de cavités au moins en regards des excroissances de la garniture et destinées à recevoir lesdites excroissances.

Suivant un mode de réalisation les excroissances du dos de la garniture forment une nervure continue et les cavités appartenant à la feuillure forment une rainure en creux également continue.

Avantageusement, pour faciliter la mise en place du vitrage et renforcer sa tenue dans la baie, les excroissances ou la nervure sont initialement creuses et vides et on y injecte, après mise en place des vitrages dans leur baie, une matière durcissante telle une matière plastique polymérisable du type polysulfure qui assurera le verrouillage du vitrage dans sa baie après durcissement.

L'invention sera maintenant décrite plus en détail en référence aux figures jointes qui représentent:

– figure 1: une vue schématique en perspective d'un pare-brise sur une automobile,
– figure 2: une vue en coupe d'un moyen traditionnel de fixation d'un pare-brise,
– figure 3: une vue en coupe du dispositif selon l'invention pour fixer un pare-brise à deux feuilles de verre.
– figure 4: une vue en coupe d'une garniture selon l'invention fixée sur la baie sans collage, servant au montage d'un vitrage ayant une seule épaisseur de verre.

Comme déjà dit, l'invention s'applique à la fixation de vitrages divers dans des baies diverses, de véhicules automobiles, mais également de bâtiments et d'appareils de toutes sortes. Cependant dans la description nous ne prendrons que l'exemple des véhicules automobiles.

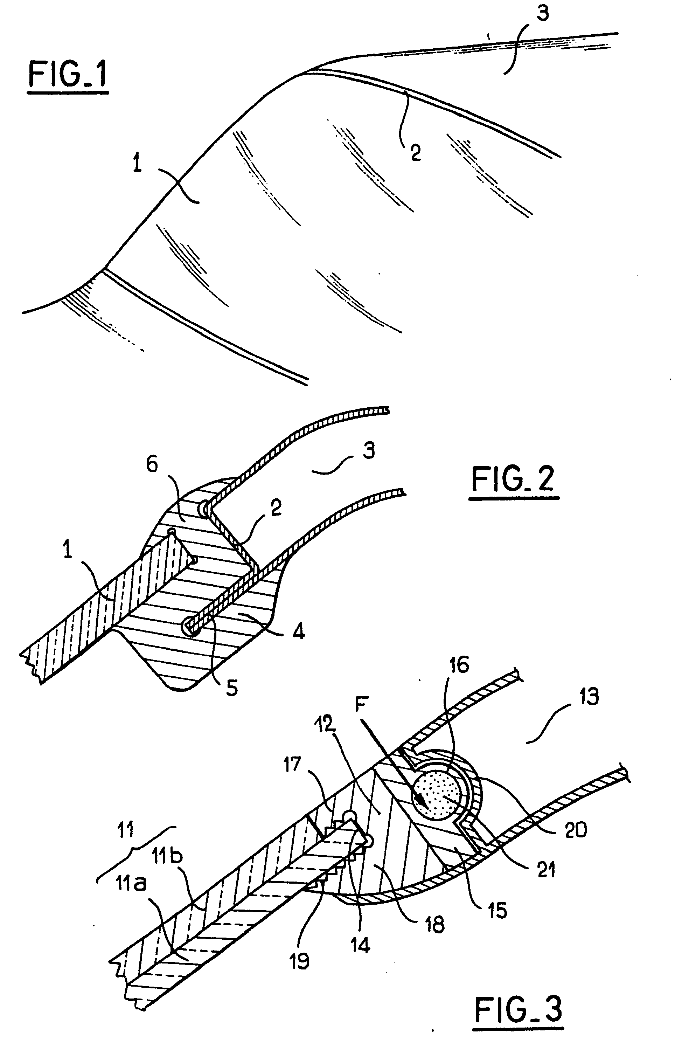

Cette utilisation dans le domaine des véhicules automobiles est illustrée par la figure 1. On désire monter un pare-brise 1 dans la baie 2 d'une carrosserie automobile 3.

Classiquement, comme montré sur la figure 2, on utilise pour ce faire une garniture ou joint 4 qui d'une part enserre le bord du vitrage 1 et qui d'autre part chevauche un repli 5 de tôle de carrosserie sur toute la périphérie de la baie 2.

Ce type de joint 4 permet de monter tous types de vitrages, vitrages simples de toutes épaisseurs ou vitrages feuilletés, mais il forme des protubérances 6 qui du côté de l'extérieur de la carrosserie perturbent l'écoulement de l'air et élèvent le cœfficient de pénétration dans l'air (Cx) du véhicule et d'autre part, il est difficile à engager dans la baie de carrosserie car il faut déformer la lèvre interne dudit joint pour la passer derrière le repli 5 de tôle, ce qui empêche l'approche du vitrage et son montage par des moyens automatisés.

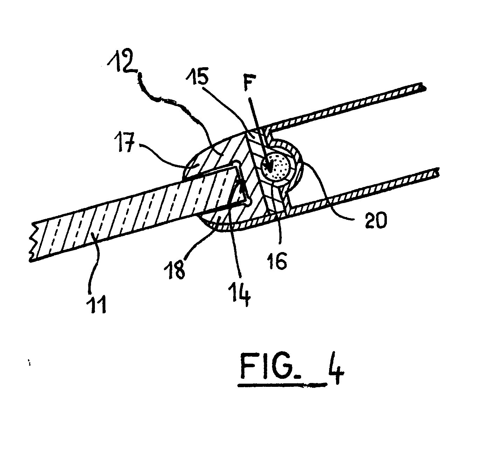

Le dispositif de montage illustré par les fig. 3 et 4 permet d'éviter les inconvénients précités.

Ce dispositif associe un vitrage, en particulier un pare-brise 11, ayant plusieurs épaisseurs de verre 11a et 11b, ainsi par exemple un vitrage feuilleté à deux feuilles de verre 11a et 11b, comme montré sur la fig. 3, ou pouvant n'avoir qu'une épaisseur de verre, comme montré fig. 4, un joint ou garniture 12, et une baie 13 dont la feuillure a une forme particulière, détaillée plus loin.

Le vitrage 11 montré fig. 3 est un vitrage un peu particulier, tel que son bord est dégradé en «marche d'escalier».

Ceci peut par exemple être obtenu en accolant deux épaisseurs de verre 11a et 11b telles que la (ou les) feuille(s) de verre constituant l'épaisseur 11a est (sont) légèrement plus grande(s) que la (ou les) feuille(s) de verre constituant l'épaisseur 11b. A titre d'exemple non limitatif, l'épaisseur 11a déborde d'environ 5 mm de l'épaisseur 11b. Cet assemblage de feuilles de verre est tel que le pare-brise 11 étant en place, sur le véhicule, l'épaisseur 11b, c'est-à-dire celle dont les dimensions en longueur et largeur sont les plus petites, est du côté de l'extérieur du véhicule.

Avantageusement ces deux épaisseurs 11a et 11b appartiennent à un vitrage de sécurité du type vitrage feuilleté formé de deux feuilles de verre recouvrant une feuille intercalaire d'une matière plastique telle que le butyral de polyvinyl; le vitrage 11 peut également être revêtu sur l'une ou l'autre de ses faces, par exemple d'une couche de matière plastique, notamment une couche anti-lacération de polyuréthane.

Le vitrage 11 montré fig. 4 est constitué par une seule feuille de verre.

L'invention couvre également les vitrages fabriqués en des matériaux autres que le verre.

La garniture ou joint 12, montrée sur les fig. 3 et 4 est un cordon par exemple en caoutchouc, qui présente une encoche 14 destinée à recevoir le vitrage 11 et un dos 15 du côté opposé à celui en contact avec le vitrage muni d'excroissances 16. L'encoche 14 est limitée par deux lèvres, une lèvre supérieure 17 et une lèvre inférieure 18 avantageusement munies de dentelures 19.

Les tailles et les formes des lèvres 17 et 18 dépendent de la nature du vitrage à maintenir.

Par exemple dans le cas du vitrage, montré fig. 3, la lèvre 17 a une épaisseur égale à l'épaisseur de la feuille 11b et une longueur, mesurée depuis le fond de l'encoche 14, au moins égale, et de préférence exactement égale à la longueur du débordement de la feuille 11a sur la feuille 11b. L'extrémité de la lèvre 17 est coupée au carré, de façon à s'appuyer exactement sur la tranche de la feuille 11b. Le dessus de cette lèvre 17, c'est-à-dire la portion destinée à être orientée vers l'extérieur du véhicule est de préférence plat, de sorte que le dessus de ladite lèvre 17 soit exactement dans le prolongement du vitrage 11.

Dans l'exemple illustré par la figure 4, les deux lèvres 17 et 18 ont sensiblement la même forme. Après emboîtement sur le vitrage, les parois des lèvres formant l'encoche 14 sont parallèles, mais avant emboîtement, les parois internes des deux lèvres 17 et 18 destinées à porter sur le vitrage 11 convergent légèrement l'une vers l'autre, de façon à former une entrée d'encoche 14 plus étroite que le fond de ladite encoche; ainsi un léger effet ressort applique étroitement les deux lèvres 17 et 18 sur le vitrage, garantissant une bonne étanchéité et un bon maintien du vitrage.

Alors que les lèvres 17 et 18 sont en une matière relativement ferme et rigide, avantageusement le dos 15 du joint est plus souple et par exemple en une bande de caoutchouc alvéolaire. Ce dos 15 possède des excroissances 16, qui avantageusement sont initialement creuses et vides, et qui avantageusement également, sont reliées les unes aux autres de façon à former une nervure par exemple demi-cylindrique continue en saillie.

La peau de cette bande de caoutchouc souple formant le dos 15 est cependant lisse et imperméable de façon à être étanche et insensible à l'eau. Cette bande souple peut s'aplatir pour s'ajuster exactement à la feuillure de la baie 13, en rattraper les imperfections et assurer ainsi une parfaite étanchéité.

Cette bande de matière plus souple qui constitue le dos 15 peut être fabriquée séparément du reste du joint 12 puis collée ensuite dessus. Cependant, avantageusement, les deux portions de joint 12 peuvent être fabriquées simultanément par coextrusion à l'aide de deux boudineuses débitant dans une seule et même buse d'extrusion. Les matières aptes à adhérer l'une à l'autre, les conditions de fabrication, sont bien connues de l'homme de l'art.

Le côté inférieur du joint 12 présente dans les exemples montrés sur les figures 3 et 4, un profil qui s'adapte exactement à la feuillure de la baie 13.

Cette feuillure possède en regard des excroissances 16 du joint 12, des cavités 20 permettant leur logement.

Avantageusement, et nécessairement lorsque les excroissances 16 forment une nervure continue en relief, ces cavités sont jointes et constituent alors une rainure en creux sur toute la périphérie de la baie 13. Cette rainure ou ces cavités 20 ont des dimensions qui sont au moins celles de la nervure ou des excroissances 16. Cependant pour une plus grande précision de positionnement, nervure ou excroissances 16 et rainure ou cavités 20 ont un profil et des dimensions exactement complémentaires.

Le pare-brise 11 entouré de son joint 12 étant monté dans la baie, son verrouillage s'effectue en injectant une matière durcissable à l'intérieur des excroissances ou de la nervure 16, cette matière étant par exemple une matière polymérisable du type polysulfure qui est fluide avant polymérisation. Grâce à cette fluidité, cette matière peut d'une part s'injecter facilement, d'autre part fluer aisément à l'intérieur des excroissances ou de la nervure 16. Lorsque la nervure 16 est continue, on obtient ainsi après le temps de polymérisation, un jonc 21 de matière durcie entourant le pare-brise et le bloquant dans la baie.

Dans la mesure où la matière n'a pas flué sur la totalité de la longueur de la nervure, ou quand les excroissances sont discontinues, le pare-brise est maintenu à l'intérieur de la baie par des plots séparés. L'injection de la matière plastique peut se faire, le pare-brise étant en place, par piqûre dans le dos 15 jusque dans les cavités 20, suivant une direction perpendiculaire au plan du vitrage 11, selon la flèche F notée sur la figure 3.

Grâce au dispositif précédemment décrit, le montage d'un pare-brise est simple. Un joint 12 est disposé à cheval sur la périphérie d'un pare-brise 11; cet ensemble est présenté face à une baie 13, puis posé dans ladite baie. Les excroissances ou la nervure 6, faites en un caoutchouc souple, initialement vides, s'écrasent facilement et reprennent ensuite leur forme lorsqu'elles sont logées dans les cavités ou la rainure 20.

Grâce à la souplesse du dos 15, le joint 12 s'applique exactement dans la feuillure de la baie 13, en rattrapant les éventuelles imperfections de feuillure.

Le pare-brise étant ainsi posé, à l'aide de moyens d'injection, tels des seringues, on pique le dos 15 du joint 12 suivant la flèche F, en divers endroits de la périphérie et on y injecte une matière durcissable du type polysulfure. Après polymérisation, le pare-brise est bloqué dans la baie.

**Revendications**

1. Garniture (12) pour le montage d'un vitrage (11) dans la feuillure d'une baie (13) ayant sur son dos (15), c'est-à-dire du côté opposé à celui en contact avec le vitrage des excroissances (16) qui forment une nervure en relief continue, destinée à coopérer avec des cavités (20) formant une rainure en creux dans la feuillure, caractérisée en ce qu'elle est constituée de deux parties en matières de consistances différentes, une première partie ou dos (15) en forme de bande, munie des excroissances (16) et en contact avec la feuillure, en une matière souple facilement déformable, du type caoutchouc alvéolaire, et une seconde partie en une matière plus rigide et plus ferme, en contact avec le vitrage (11).

2. Garniture selon la revendication 1, caractérisée en ce que les excroissances (16) sont initialement creuses et aptes à être remplies d'une matière durcissable, telle une matière plastique polymérisable, pour verrouiller le vitrage dans la baie.

3. Garniture selon la revendication 2, caractérisée en ce que la matière plastique polymérisable est un polysulfure.

4. Application de la garniture selon les revendications 1 à 3 au montage d'un vitrage dans la feuillure d'une baie, notamment au montage d'un pare-brise sur une automobile caractérisée en ce qu'elle combine:
— ladite garniture,
— des cavités prévues dans la feuillure de la baie, au moins en regard des excroissances de la garniture, et destinées à recevoir lesdites excroissances.

5. Application selon la revendication 4 caractérisée en ce qu'après pose du vitrage dans la feuillure, on injecte au travers de la garniture elle-même en piquant, dans ses excroissances ou sa nervure, une matière durcissable du type matière plastique polymérisable et de consistance fluide avant polymérisation, telle un polysulfure, et on laisse durcir la matière injectée, verrouillant ainsi l'ensemble vitrage-garniture dans la feuillure.

**Claims**

1. Seal (12) for mounting a pane (11) in the rebate of an opening (13), the seal having on its back (15), that is to say the side opposite to that in contact with the pane, excrescences (16) which form a continuous projecting rib, intended for cooperating with cavities (20) forming a recessed groove in the rebate, characterized in that the seal is constituted of two parts in materials of different consistencies, a first part or back (15) in the form of a strip, furnished with the excrescences (16) and in contact with the rebate, this part being of an easily deformable flexible material, of the cellular rubber type, and a second part in a more rigid and firmer material, in contact with the pane (11).

2. Seal according to claim 1, characterized in that the excrescences (16) are initially hollow and adapted to be filled with a hardenable material, such as a polymerisable plastics material, for locking the pane in the opening.

3. Seal according to claim 2, characterized in that the polymerisable plastics material is a polysulphide.

4. Application of the seal according to claims 1 to 3 to the mounting of a pane in the rebate of an opening, notable for mounting a windscreen on an automobile, characterized in that it combines:
— said seal,
— cavities formed in the rebate of the opening, at least opposite the excrescences of the seal, the cavities being intended for receiving said excrescences.

5. Application according to claim 4, characterized in that, after the pane has been placed in the rebate, a hardenable material of the polymerisable plastics material type and having a fluid consistency before polymerisation, such as a polysulphide, is injected through the seal itself, by piercing, into its excrescences or rib, and that the injected material is allowed to harden, thus locking the pane-seal assembly in the rebate.

**Patentansprüche**

1. Dichtung (12) zum Einbau einer Scheibe (11) im Falz eines Rahmens (13), welche an ihrem Rücken, d.h. auf der der Kontaktfläche mit der Scheibe gegenüberliegenden Seite, Ausbauchungen (16) aufweist, die eine Rippe mit kontinuierlich erhabener Ausformung bilden, welche mit eine hohle Rinne bildenden Ausnehmungen (20) im Falz zusammenwirkt, dadurch gekennzeichnet, dass die Dichtung aus zwei Teilen mit Materialien unterschiedlicher Konsistenz aufgebaut ist, dass der erste Teil oder Rücken (15) die Form eines Bandes besitzt, das die Ausbauchungen (16) aufweist und sich in Kontakt mit dem Falz befindet sowie aus einem biegsamen, leicht deformierbaren Material in der Art von zellförmigem Kautschuk gebildet ist, und dass der zweite Teil sich in Kontakt mit der Scheibe (11) befindet und aus einem steiferen und festeren Material hergestellt ist.

2. Dichtung nach Anspruch 1, dadurch gekennzeichnet, dass die Ausbauchungen (16) anfänglich hohl und zur Verankerung der Scheibe im Rahmen mit einem härtbaren Material, wie einem polymerisierbaren Kunststoff, füllbar sind.

3. Dichtung nach Anspruch 2, dadurch gekennzeichnet, dass der polymerisierbare Kunststoff aus Polysulfid gebildet ist.

4. Verwendung der Dichtung nach einem der Ansprüche 1 bis 3 zum Einbau einer Scheibe im Falz eines Rahmens, insbesondere zum Einbau einer Windschutzscheibe in ein Kraftfahrzeug, gekennzeichnet durch die Kombination der Dichtung und der Ausnehmungen, die zumindest mit Hinsicht auf die Ausbauchungen der Dichtung im Falz des Rahmens vorgesehen und zur Aufnahme dieser Ausbauchungen bestimmt sind.

5. Anwendung nach Anspruch 4, dadurch gekennzeichnet, dass man nach dem Einlegen der Scheibe in den Falz durch die eingestochene Dichtung in die Ausbauchungen oder die Rippe ein härtbares Material in Art eines polymerisierbaren Kunststoffs und mit vor Polymerisation fluider Konsistenz, insbesondere ein Polysulfid, einspritzt und das eingespritzte Material unter Verankerung des Aufbaus aus Scheibe und Dichtung in dem Falz aushärten lässt.

FIG.1

FIG.2

FIG.3

FIG. 4